# EUROPEAN PATENT APPLICATION

(11) **EP 2 690 853 A2**
(43) Date of publication of application: **29.01.2014**
(21) Application number: 13177781.5
(22) Date of filing: 24.07.2013
(51) Int. Cl.: H04N 1/32

(54) **Communication apparatus, method of controlling the communication apparatus, and program**

(30) Priority: 24.07.2012 JP 2012163546
(71) Applicant: CANON KABUSHIKI KAISHA, Ohta-ku Tokyo 146-8501 (JP)
(72) Inventor: Matsuda, Jun, Ohta-ku, Tokyo (JP); Hara, Kenichiroh, Ohta-ku, Tokyo (JP)
(74) Representative: Northway, Daniel Robert

(57) **Abstract**

A communication apparatus includes recording means configured to record a plurality of pieces of information in which position information and date and time information are associated with each other, as log data in a recording medium, reception means configured to receive identification information capable of specifying image files recorded in an external device and imaging dates and times relating to the image files, from the external device without receiving the image files, determination means configured to determine whether the received imaging dates and times and the date and time information of the log data are in a predetermined relationship, and association means configured to associate identification information corresponding to the imaging dates and times determined to be in the predetermined relationship with position information corresponding to the date and time information of the log data determined to be in the predetermined relationship.

## Description

### BACKGROUND OF THE INVENTION

### Field of the Invention

The present invention relates to communication apparatuses connectable to other apparatuses.

### Description of the Related Art

Recent years, techniques of adding position information to an image captured with a digital camera using log data generated with a global positioning system (GPS) logger has been used. For example, in the technique discussed in Japanese Patent Application Laid-Open No. 2001-91290, a personal computer (PC) obtains log data generated by a GPS logger and images generated by a digital camera. The PC performs matching based on the generation dates and times of each data and image to add position information to the images.

In the above-described technique in Japanese Patent Application Laid-Open No. 2001-91290, however, to add the position information to the images, the log data and the images have to be temporarily copied from respective different devices to the PC, and the user's operation is troublesome.

### SUMMARY OF THE INVENTION

The present invention is directed to readily adding position information to images.

The present invention in its first aspect provides a communication apparatus as specified in claims 1 to 20.

The present invention in its second aspect provides an image processing apparatus as specified in claim 21.

The present invention in its third aspect provides a method of controlling a communication apparatus as specified in claims 22 to 30.

The present invention in its fourth aspect provides a method of controlling an image processing apparatus as specified in claim 31.

The present invention in its fifth aspect provides a computer readable program as specified in claim 32.

The present invention in its six aspect provides a computer readable program as specified in claim 33

Further features and aspects of the present invention will become apparent from the following detailed description of exemplary embodiments with reference to the attached drawings.

### BRIEF DESCRIPTION OF THE DRAWINGS

Fig. 1 is a block diagram illustrating a configuration of an image processing apparatus according to the first exemplary embodiment.

Fig. 2 is a block diagram illustrating a configuration of an external device according to the first exemplary embodiment.

Figs. 3A and 3B illustrate screens displayed on a display unit of the external device according to the first exemplary embodiment.

Fig. 4 is a conceptual view illustrating log data according to the first exemplary embodiment.

Fig 5 is a flowchart illustrating an operation of the image processing apparatus according to the first exemplary embodiment.

Fig. 6 is a conceptual view illustrating a recording region of the image processing apparatus according to the first exemplary embodiment.

Figs. 7A and 7B illustrate screens displayed on the display unit of the external device according to the first exemplary embodiment.

Fig. 8 illustrates a sequence of processing for adding position information to images by cooperation of the image processing apparatus and the external device according to the first exemplary embodiment.

Fig. 9 is a flowchart illustrating an operation of the external device for adding position information to images according to the first exemplary embodiment.

Fig. 10 is a flowchart illustrating an operation of the image processing apparatus for adding position information to images according to the first exemplary embodiment.

Fig. 11 is a flowchart illustrating an operation of the external device for adding position information to images according to a second exemplary embodiment.

Fig. 12 is a flowchart illustrating an operation of the image processing apparatus for adding position information to images according to the second exemplary embodiment.

Fig. 13 illustrates a screen displayed on the display unit of the external device according to a third exemplary embodiment.

Fig. 14 is a flowchart illustrating an operation of the external device for adding position information to images according to the third exemplary embodiment.

Fig. 15 is a flowchart illustrating an operation of the image processing apparatus for adding position information to images according to the third exemplary embodiment.

### DESCRIPTION OF THE EMBODIMENTS

Hereinafter, the exemplary embodiments of the present invention will be described with reference to the attached drawings.

The exemplary embodiments described below are only examples for implementing the present invention, and various modifications and changes can be made as needed depending on the configurations of the apparatuses to which the exemplary embodiments of the present invention are applied and various conditions. Further, any combination of the exemplary embodiments can be employed as needed.

The first exemplary embodiment is described. Internal Configuration of a Digital Camera 100

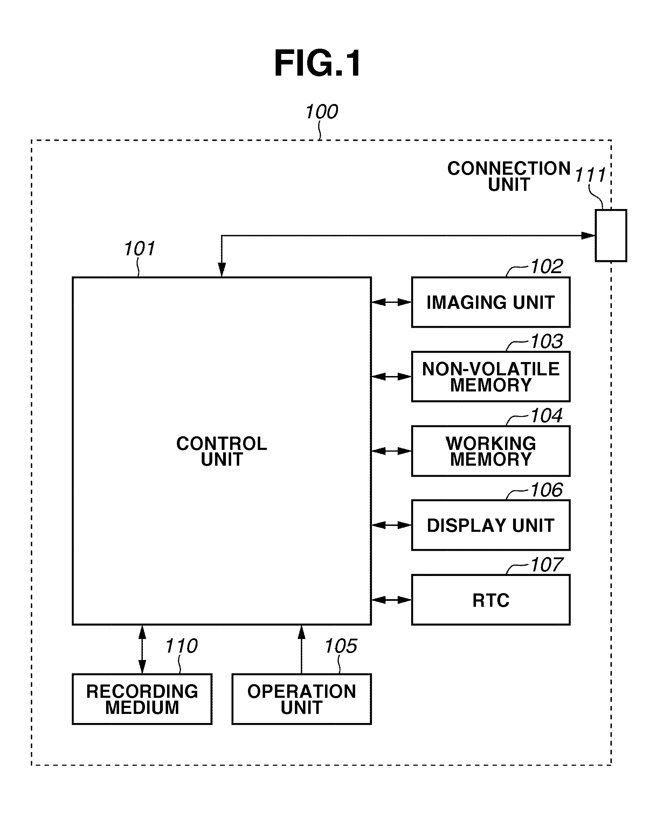

Fig. 1 is a block diagram illustrating a configuration of a digital camera 100 that is an example of an image processing apparatus according to the present exemplary embodiment. In the description, the digital camera will be described as an example of the image processing apparatus, however, the image processing apparatus is not limited to the digital camera. For example, the image processing apparatus may be information processing apparatuses such as a cellular phone, a tablet device, and a personal computer, or imaging apparatuses such as a cellular phone with a camera.

A control unit 101 controls each unit in the digital camera 100 according to an input signal or a program described below. In place of controlling the entire apparatus by the control unit 101, the control of the entire apparatus may be performed by a plurality of hardware devices by sharing the processing.

An imaging unit 102 converts object light formed with a lens included in the imaging unit 102 into an electric signal, performs noise reduction processing, and the like, and outputs the digital data as image data. The captured image data is stored in a buffer memory, predetermined operation is performed on the data in the control unit 101, and the data is recorded in a recording medium 110.

A nonvolatile memory 103 is electrically erasable and recordable non-volatile memory. The non-volatile memory 103 stores a program described below to be executed by the control unit 101, and other data.

A working memory 104 is used as a buffer memory for temporarily storing image data captured with the imaging unit 102, a memory for image display for a display unit 106, a work area for the control unit 101, and the like.

An operation unit 105 is used to receive from the user a user's instruction to the digital camera 100. The operation unit 105 includes operation members for users, for example, a power button for instructing ON/OFF of a power supply of the digital camera 100, a release switch for instructing image capturing, and a playback button for instructing playback of image data. The operation unit 105 further includes a touch panel formed on the display unit 106 described below. The release switch includes a SW1 and a SW2. A half-press state, as it is called, of the release switch turns on the SW1. In such a state, the operation unit 105 receives an instruction for preparing for image capturing such as automatic focus (AF) processing, automatic exposure (AE) processing, automatic white balance (AWB) processing, and electronic flash (EF) (flush pre-emission) processing. A full-press state, as it is called, of the release switch turns on the SW2. In such a state, the operation unit 105 receives an instruction for performing image capturing.

The display unit 106 displays a viewfinder image in image capturing, captured image data, and characters for interactive operation. The display unit 106 is not always necessary to be provided to the digital camera 100. The digital camera 100 can be connected to the display unit 106, and the apparatus 100 can include at least a display control function for controlling the display of the display unit 106.

A real-time clock (RTC) 107 is a time measuring unit for counting time. The RTC 107 outputs date and time information indicating date and time in response to a request from the control unit 101. The RTC 107 includes a power source in the clock, and can continue time measuring operation while the power source of the body of the digital camera 100 is turned off.

A recording medium 110 can record images output from the imaging unit 102. In the present exemplary embodiment, images are processed in the Exchangeable Image File Format-Joint Photographic Experts Group (Exif-PEG) format. The recording medium 100 may be attachable and detachable to/from the digital camera 100 or may be provided in the digital camera 100. In other words, it is only necessary that the digital camera 100 includes at least a means for accessing the recording medium 110.

A connection unit 111 is an interface for connecting to an external device. The digital camera 100 according to the present exemplary embodiment can exchange data with an external device via the connection unit 111. In the present exemplary embodiment, the communication unit 111 is an antenna. Via the antenna, the control unit 101 can communicate with an external device. As the protocol for exchanging data, for example, Picture Transfer Protocol over Internet Protocol (PTP/IP) via a wireless local area network (LAN) can be employed. The method for communicating with the digital camera 100 is not limited to the method. For example, the connection unit 111 can include a wireless communication module such as an infrared communication module, a Bluetooth (registered trademark) communication module, and a wireless universal serial bus (USB). Further, wired connection such as a USB cable, a High-Definition Multimedia Interface (HDMI) (registered trademark), IEEE 1394 can be employed. Internal Configuration of the Cellular Telephone 200

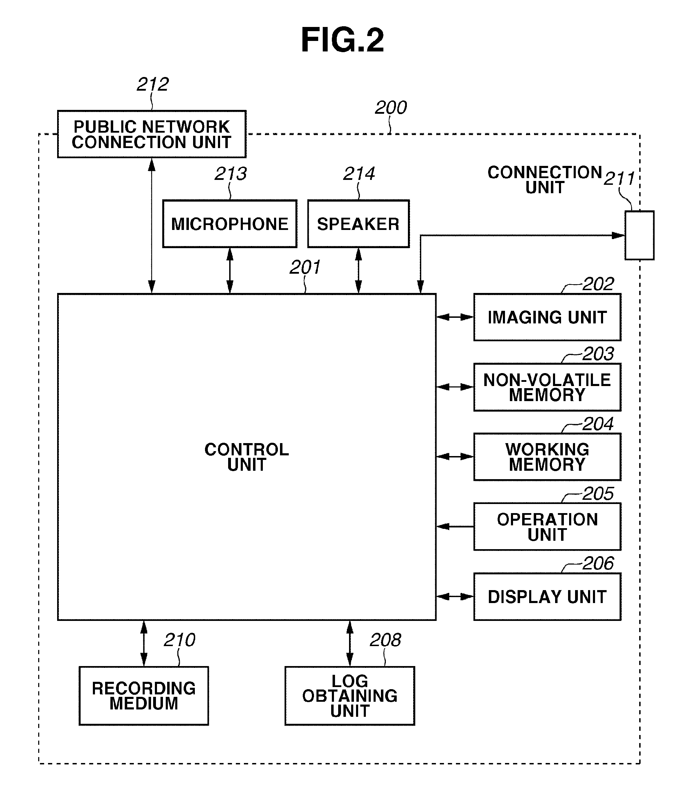

Fig. 2 is a block diagram illustrating a configuration of a cellular telephone 200 that is an example of the external device according to the present exemplary embodiment. In the description, the cellular telephone will be described as an example of the external device, however, the external device is not limited to the cellular telephone. For example, the external device may be communication devices such as a digital camera with a wireless function, a tablet device, and a personal computer.

A control unit 201 controls each unit in the cellular telephone 200 according to an input signal or a program described below. In place of controlling the entire device by the control unit 201, the control of the entire device can be performed by a plurality of hardware devices by sharing the processing.

An imaging unit 202 converts object light formed with a lens included in the imaging unit 202 into an electric signal, performs noise reduction processing, and the like, and outputs the digital data as image data. The captured image data is stored in a buffer memory, predetermined operation is performed on the data in the control unit 201, and the data is recorded in a recording medium 210.

A non-volatile memory 203 is electrically erasable and recordable non-volatile memory. The non-volatile memory 203 stores a program described below to be executed by the control unit 201, and other data.

A working memory 204 is used as a memory for image display for a display unit 206, a work area for the control unit 201, and the like.

An operation unit 205 is used to receive from the user a user's instruction to the cellular telephone 200. The operation unit 205 includes operation members, for example, a power button for instructing ON/OFF of the power supply of the cellular telephone 200 for users, and a touch panel formed on the display unit 206.

The display unit 206 performs display of image data, and display of characters for interactive operation. The display unit 206 is not always necessary to be provided to the cellular telephone 200. The cellular telephone 200 can be connected to the display unit 206, and the cellular telephone 200 can include at least a display control function for controlling the display of the display unit 206.

A log obtaining unit 208 performs positioning processing. In the positioning processing, the log obtaining unit 208 receives signals from GPS satellites, and based on the received signals, calculates position information indicating a position of the cellular telephone 200. In the present exemplary embodiment, the position information is expressed with coordinates of latitude and longitude. The log obtaining unit 208 also obtains date and time information indicating date and time the position information was calculated by the positioning processing.

A specific obtaining method is described below. A signal received from a GPS satellite includes date and time information of GPS time, as it is called. The GPS time included in the signal indicates date and time the signal was output from the GPS satellite. The GPS time is in synchronization with Universal Time Coordinated (UTC). The signal received from the GPS satellite further includes information indicating a difference between the GPS time and the UTC. The log obtaining unit 208, using the information, calculates UTC from GPS time. The processing enables the log obtaining unit 208 to obtain UTC as date and time information indicating the date and time the position information was calculated. The position information and the date and time information is provided to the control unit 201 as needed. In the present exemplary embodiment, the GPS is employed as the log obtaining unit 208, however, the log obtaining unit 208 is not limited to the GPS. For example, the log obtaining unit 208 may be a device for obtaining position information or date and time information from an external device such as a base station of a cellular phone. Alternatively, the log obtaining unit 208 can be a device for obtaining position information or date and time information from a public wireless LAN access point via a connection unit 211 described below. The log obtaining unit 208 is an example of a position obtaining unit or a date and time obtaining unit.

A recording medium 210 can record image data output from the imaging unit 202. The recording medium may can be attachable and detachable to/from the cellular phone 200 or may be provided in the cellular phone 200. In other words, it is only necessary that the cellular phone 200 includes at least a means for accessing the recording medium 210.

The connection unit 211 is an interface for connecting to an external device. The cellular phone 200 according to the present exemplary embodiment can exchange data with the digital camera 100 via the connection unit 211. In the present exemplary embodiment, the communication unit 211 is an antenna. Via the antenna, the control unit 201 can be connected with the digital camera 100. In the connection with the digital camera 100, the control unit 201 can be connected directly or via an access point. As the protocol for exchanging data, for example, PTP/IP via a wireless LAN can be employed. The method for communicating with the digital camera 100 is not limited to the method. For example, the connection unit 211 can include an infrared communication module, a Bluetooth (registered trademark) communication module, and a wireless communication module such as a wireless USB. Further, wired connection such as a USB cable, an HDMI (registered trademark), IEEE 1394 can be employed.

A public network connection unit 212 is an interface used to perform public line wireless communication. The cellular phone 200 can be used for telephone calls with other devices via the public network connection unit 212. The telephone call can be implemented by inputting and outputting a voice signal with the control unit 201 via a microphone 213 and a speaker 214. In the present exemplary embodiment, the public line connection unit 212 is an antenna. Via the antenna, the control unit 201 can be connected with a public line. One antenna can serve as both the connection unit 211 and the public network connection unit 212. Log Data Generation in the Cellular Phone 200

Next, log data generation processing in the cellular phone 200 is described. The cellular phone 200 according to the present exemplary embodiment has a preinstalled application (hereinafter, referred to as log application) for generating log data in the recording medium 210. The cellular phone 200, by executing the log application, generates log data indicating moving locus of the cellular phone 200.

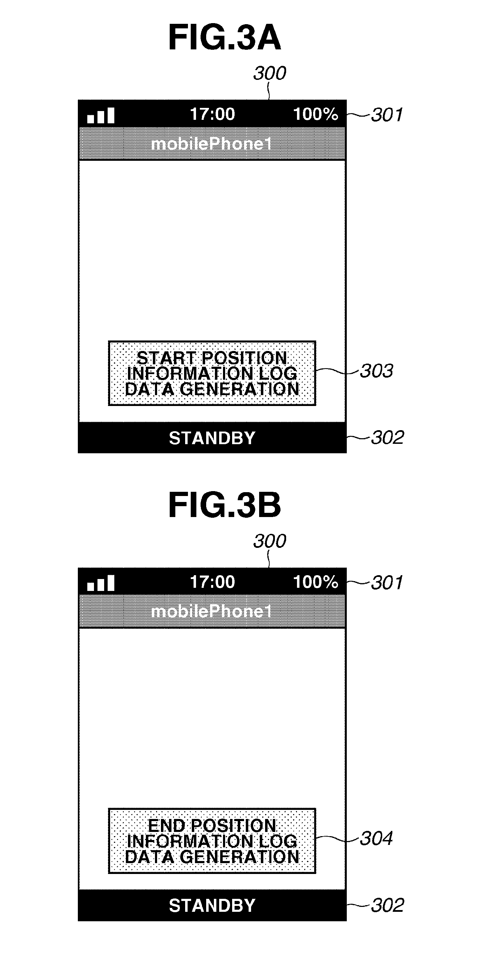

Fig. 3A illustrates a screen displayed on the display unit 206 of the cellular phone 200 during the execution of the log application. A screen 300 is displayed on the display unit 206 in response to a start of operation of the log application. In the example in Fig. 3A, the cellular phone 200 has not been connected with the digital camera 100. Consequently, a message 302 indicating that the cellular phone 200 has not been connected with the digital camera 100 is being displayed. In Fig. 3A, a bar 301 displays a radio wave condition of a communications network connectable with the cellular phone 200, time, and a state of charge of the battery. A button 303 is used to start log data generation. A user selects the button 303 via the operation unit 205 to input an instruction to start log data generation. During the execution of the log data generation, as illustrated in Fig. 3B, in place of the button 303, a button 304 is displayed. The button 304 is used to end the log data generation. The user selects the button 304 via the operation unit 205 to input an instruction to end log data generation.

Hereinafter, a procedure for generating log data is described. The control unit 201 detects a selection of the button 303, reads position information and date and time information obtained by the log obtaining unit 208 at a constant time interval, and records the information as log data in the recording medium 210. To the log data generated in this operation, the position information and the date and time information is regularly added until the user selects the button 304 in Fig. 3B to end the log data generation, or the remaining battery capacity of the cellular phone 200 becomes equal to or less than a predetermined value. The plurality of pieces of position information and date and time information included in the log data generated in such a way indicate the moving locus of the cellular phone 200.

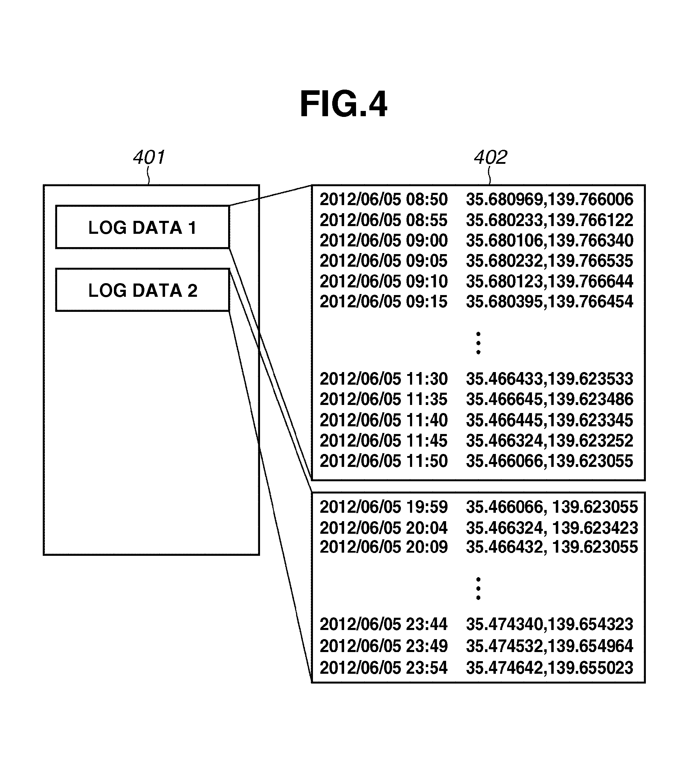

Fig. 4 illustrates an example of the log data generated according to the procedure. The example in Fig. 4 illustrates an example the position information and date and time information was recorded as the log data at five-minute intervals. In a part 401 of the recording area of the recording medium 210, two sets of log data have been recorded. For example, the user inputs an instruction for starting log data generation at the position of latitude of 35.680969 and longitude of 139.766006 at 08:50, and inputs an instruction for stopping the log data generation once at the position of latitude of 35.466066 and longitude of 139.623055 at 11:50. Then, the user inputs an instruction for starting the log data generation again at 19:59, and inputs an instruction for stopping the log data generation at 23:54. As a result of the operation, the log data 1 and the log data 2 have been generated.

The example in Fig. 4 is a conceptual diagram illustrated for description, in which the log data may be recorded in a format including information other than the position information and the date and time information. For example, the log data can be recorded in a format complying with a National Marine Electronics Association (NMEA) format. The log data generation method is not limited to the above-described method. For example, instead of adding log data at constant time intervals, when the apparatus is moved a predetermined distance or more after the log data addition, the position information and the date and time information be added. In this case, if the apparatus is not moved, no new position information and date and time information is added, and consequently, the log data size can be suppressed. In the present exemplary embodiment, the position information is expressed in latitude and longitude. Alternatively, the position information may include, for example, direction information and information about accuracy (for example, the number of satellites used for the positioning).

The log data generation procedure has been described above.

### Image Generation in the Digital Camera 100

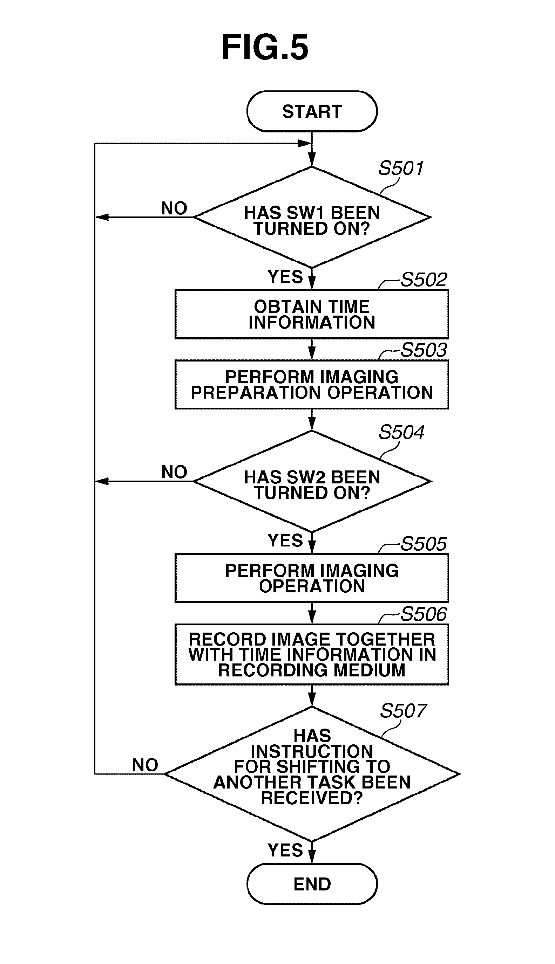

With reference to Fig. 5, image generation processing in the digital camera 100 according to the present exemplary embodiment is described. Fig. 5 is a flowchart illustrating operation of the digital camera 100 in the image generation processing. The processing illustrated in the flowchart is started in response to an operation of turning on the power of the digital camera 100. In this state, on the display unit 106, a through image input from the imaging unit 102 has been displayed, and the user can perform image capturing while checking a video appearing on the display unit 106.

In step S501, the control unit 101 determines whether the SW1 has been turned on. If the control unit 101 determines that the SW1 has not been turned on (NO in step S501), the processing in this step is repeated. If the CPU 1 determines that the SW1 has been turned on (YES in step S501), the process proceeds to step S502.

In step S502, the control unit 101 obtains date and time information from the RTC 107.

In step S503, the control unit 101 performs control such that imaging preparation operation is performed with the imaging unit 102.

In step S504, the control unit 101 determines whether the SW2 has been turned on. If the control unit 101 determines that the SW2 has not been turned on (NO in step S504), the process returns to step S501. If the control unit 101 determines that the SW2 has been turned on (YES in step S504), the process proceeds to step S505.

In step S505, the control unit 101 performs imaging operation with the imaging unit 102 to capture an image.

In step S506, the control unit 101 records, in the recording medium 110, the image captured in step S504 together with the date and time information obtained in step S502. In this processing, the date and time information to be recorded together with the image is recorded, as imaging date and time of the image, in a header area of the image. The control unit 101 records, together with the image and the information, time difference information in the header area of the image. Hereinafter, the time difference information is described. The digital camera 100 according to the present exemplary embodiment can set a time zone. The time zone is a region a uniform local standard time is used. The user can set a time zone through menu operation and the like to preset time difference information indicating a time difference from UTC. For example, in Japan, the time put forward by nine hours from UTC is the local standard time, and the time zone is expressed as UTC+9.

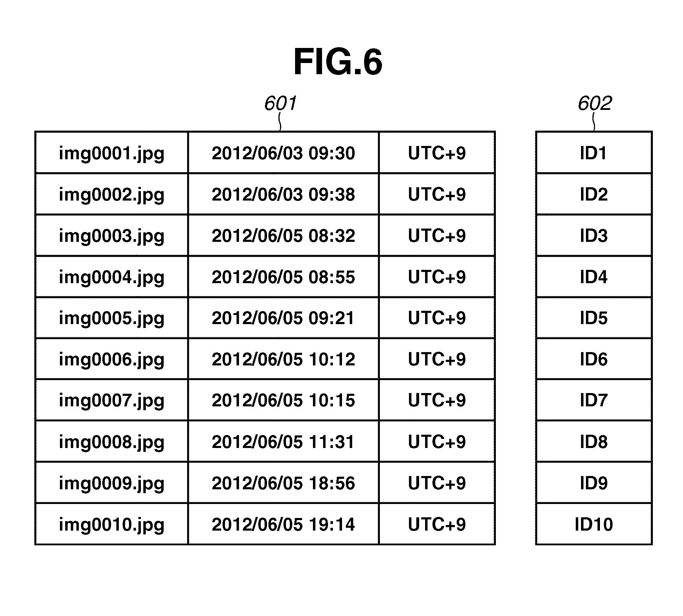

To the image obtained in a state the time zone has set to Japan, information of UTC+9 is added as the time difference information. It is assumed that, in the digital camera 100 according to the present exemplary embodiment, as the date and time information to be output by the RTC 107, time corresponding to the time zone has been previously set by user's menu operation, or the like. In other words, the control unit 101 determines that the output of the RTC 107 indicates the local standard time corresponding to the time zone. Consequently, UTC can be calculated by adding the time difference indicated by the time difference information to the output of the RTC 107. The use of UTC will be described below in detail in the description of addition of position information to an image. The time difference information is recorded in an area MakerNote, as it is called. Fig. 6 illustrates a part of the recording area of the recording medium 110 in which the image has been recorded by a processing in this step. In Fig. 6, in an area 601 in the recording region, ten images have been recorded together with the imaging date and time and the time difference information.

In the present exemplary embodiment, the control unit 101 assigns identification information for management, that is, an ID to each image recorded in the recording medium 110. The control unit 101 can identify the individual images using the IDs. The IDs are temporarily stored in the working memory 104, not in the recording medium 110. In response to a power supply turning on operation, the images recorded in the recording medium 110 are scanned, and unique values are assigned to the individual images. Each time a new image is recorded in this step, a corresponding ID is assigned to the newly recorded image. Fig. 6 illustrates a state that in a part 602 in the recording region of the working memory 104, ID1 to ID10 assigned from the img0001.jpg in order have been recorded.

In step S507, the CPU 101 determines whether an instruction for shifting to another mode has been received. For example, in a case where a pressing operation of the playback button in the operation unit 105 has been detected, the control unit 101 determines that an instruction for shifting to the playback mode has been received. If the control unit 101 determines that the instruction for shifting to another mode has not been received (NO in step S507), the process returns to step S501. If the control unit 101 determines that an instruction for shifting to another mode has been received (YES in step S507), the process ends.

The image generation processing in the digital camera 100 according to the present exemplary embodiment has been described.

### Position Information Addition to Images

Processing for adding position information to the above-described images generated in the digital camera 100 using log data generated in the cellular phone 200 will be described.

In advance of the processing, the digital camera 100 and the cellular phone 200 are connected via the connection unit 111 and the connection unit 211, and communication is established at the application level. In the present exemplary embodiment, the log application has a function for establishing a communication with the digital camera 100. By the operation of the log application, the cellular phone 200 can establish a communication with the digital camera 100.

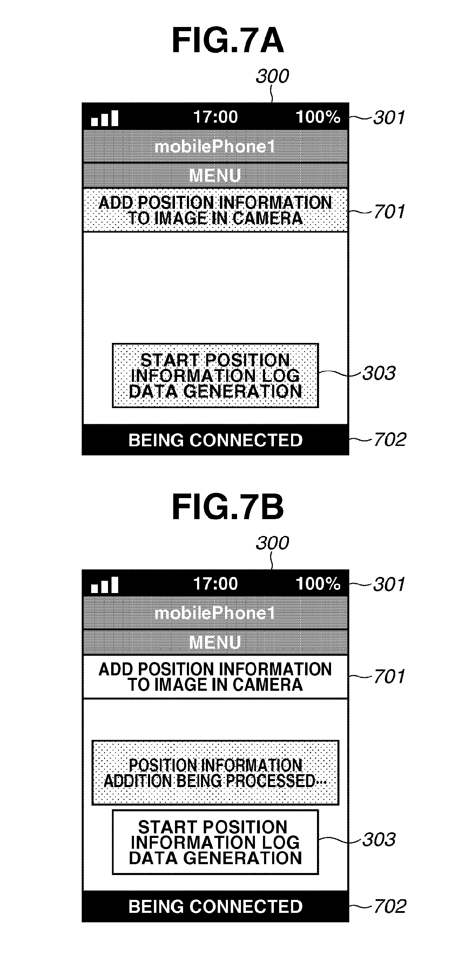

Fig. 7A illustrates a screen displayed on the display unit 206 of the cellular phone 200 during the execution of the log application in the communication-established state. On the screen in Fig. 7A, a message 702 indicating that the cellular phone 200 is being connected to the digital camera 100 is displayed. A button 701 is used to execute an operation for adding position information to images in the connected digital camera 100. The button 701 is displayed only when the digital camera 100 and the cellular phone 200 are connected with each other. The user selects the button 701 via the operation unit 205 to input an instruction for starting the processing for adding position information to the images recorded in the recording medium 110 in the digital camera 100. The processing for adding the position information, the processing started in response to reception of the input of the instruction, will be described.

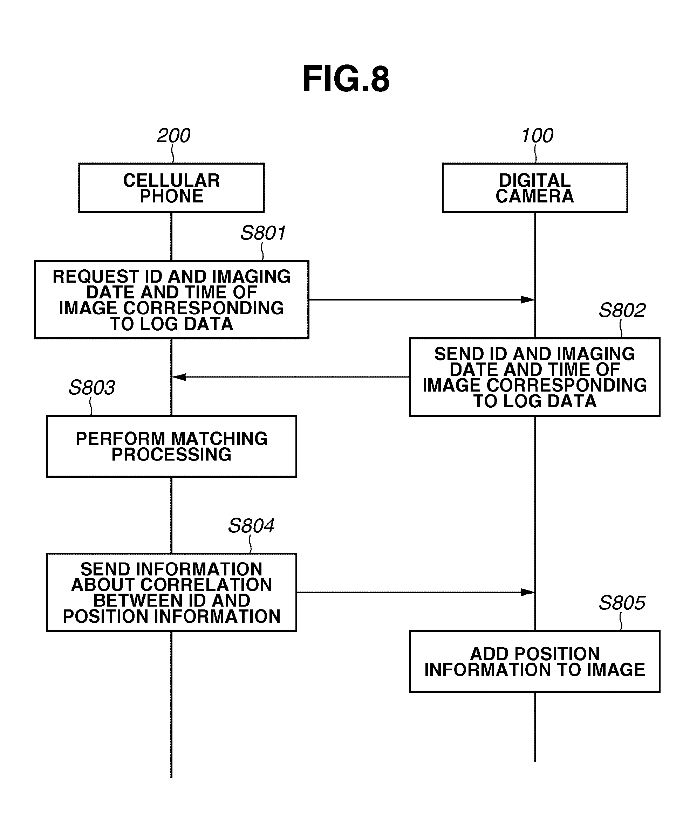

Fig. 8 schematically illustrates a sequence of the above-described processing. The processing in Fig. 8 is started in response to reception of an instruction to start the processing for adding position information to the images recorded in the recording medium 110 in the digital camera 100 via the operation unit 205 in the cellular phone 200.

In step S801, to the digital camera 100, the cellular phone 200 requests IDs and imaging dates and times of the images corresponding to the record period of the log data. Specifically, the cellular phone 200 requests IDs and imaging dates and times of images whose imaging dates and times are within a period decided by the date and time of the start of the recording and the date and time of the end of the recording of the log data stored in the recording medium 210 of the cellular phone 200. In this processing, if a plurality of sets of log data have been recorded, the cellular phone 200 requests IDs and imaging dates and times of the images based on ranges of the times decided by the dates and times of the start of the recording of the individual log data sets and the dates and times of the end of the recording. In the example in Fig. 4, the cellular phone 200 requests IDs and imaging dates and times of the images shot from 08:50 on June 5th in 2012 to 11:50, and IDs and imaging dates and times of the images shot from 19:59 on June 5th in 2012 to 23:54. As described above, the log data record periods are expressed in UTC.

The digital camera 100 receives the request, and in step S802, the digital camera 100 reads images corresponding to the request from the recording medium 110, and sends the IDs and imaging dates and times of the images to the cellular phone 200. As described above, the log data record periods are expressed in UTC. Consequently, it is not possible to correctly compare the imaging dates and times with those based on the output of the RTC 107 indicating the local standard time. To solve the problem, the digital camera 100 converts the imaging dates and times of the images into UTC, and determines images corresponding to the request. The conversion of the imaging dates and times into UTC is performed, as described in Fig. 5, using time difference information recorded for each image. For example, when the digital camera 100 receives a request based on the log data in Fig. 4, first, it converts the dates and times of the images illustrated in Fig. 6 into UTC. As a result, dates and times delayed by nine hours from the imaging dates and times of the individual images indicate UTC. The digital camera 100 determines whether the imaging dates and times converted into UTC correspond to the request. As a result, the IDs and the imaging dates and times converted into UTC of images img0009. jpg and img.0010.jpg are sent to the cellular phone 200. Hereinafter, to distinguish the imaging dates and times from those before the conversion into UTC, the imaging dates and times converted into UTC are describes as "imaging dates and times (UTC)".

Meanwhile, the capacity of the working memory 104 of the digital camera 100 is limited. Consequently, a limit of a predetermined number or less is to be set to the number of sets of an ID and imaging date and time (UTC) that can be sent at one transmission from the digital camera 100 to the cellular phone 200. In this case, there is a possibility that the number of images corresponding to the request exceeds the predetermined number. To solve the problem, in the transmission of sets of the ID and the imaging date and time (UTC), the total number of the images corresponding to the request is also sent. For example, while the number of IDs transmittable at one time is 30, if 100 images corresponding to the request are found in the digital camera 100, first, the digital camera 100 sends 30 IDs, and also sends information indicating that the total number of the images corresponding to the request is 100. The cellular phone 200 receives the information and recognizes that the rest of 70 images have not been received yet. Then, the cellular phone 200 and the digital camera 100 repeat the processing in steps S801 and S802, and all IDs and imaging dates and times (UTC) of the images corresponding to the request is received.

In response to the reception of the IDs and imaging dates and times (UTC) of the images corresponding to the record period of the log data sent from the digital camera 100, in step S803, the cellular phone 200 performs matching processing with the time information as keys. In this case, the cellular phone 200 compares the date and time information of the log data with the imaging dates and times (UTC), and out of sets having differences less than or equal to a predetermined threshold, associates position information corresponding to the date and time information of a set having a smallest difference with the ID of the image corresponding to the imaging date and time (UTC). The processing enables the generation of a set in which the ID of the image and the position information of the log data have been associated with each other.

The processing is performed to all IDs of the received images. As a result, a plurality of sets of the IDs and the position information are generated. For example, to the ID9 of the img0009.jpg is associated with the position information obtained at 09:55 on June 5th as one set. In the matching processing according to the present exemplary embodiment, the set of the small date and time difference is prioritized. However, it is not limited to the example. For example, in the date and time information indicating date and time earlier than the imaging date and time (UTC), a set with date and time information of the smallest date and time difference may be prioritized. Alternatively, for example, in the date and time information indicating date and time later than the imaging date and time (UTC), a set with date and time information of the smallest date and time difference may be prioritized.

The cellular phone 200 ends the matching processing to all IDs of the images received from the digital camera 100, and in step S804, the cellular phone 200 sends the sets generated in step S803 to the digital camera 100.

The digital camera 100 receives the sets, and in step S805, the digital camera 100 adds the position information corresponding to the IDs to the images corresponding to the IDs.

The processing for adding position information to images generated in the above-described digital camera 100 using log data generated in the cellular phone 200 has been generally described. For example, if the user carries the digital camera 100 and the cellular phone 200 together, at least, the possibility that the imaging positions of images generated in imaging in the digital camera 100 are contained in the log data that has been obtained in the cellular phone 200 is high. Consequently, the above-described processing enables, using the log data, the addition of the appropriate imaging positions to the images.

Hereinafter, respective detailed operations of the cellular phone 200 and the digital camera 100 for implementing the above-described operation will be described.

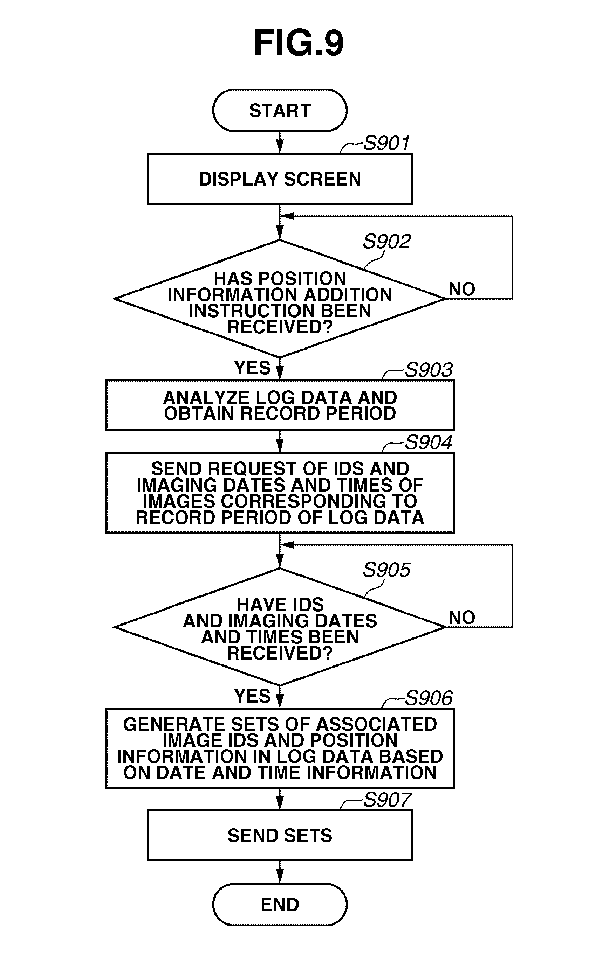

First, the operation of the cellular phone 200 is described. Fig. 9 is a flowchart illustrating the operation of the cellular phone 200 for adding position information. The processes illustrated in the flowchart are implemented by the control unit 201 in the cellular phone 200 executing a program stored in the nonvolatile memory 203, and controlling each unit in the cellular phone 200 according to the program. The following flowcharts are similarly implemented in the cellular phone 200. The processing illustrated in the flowchart is started in response to the establishment of communication with the digital camera 100 at the application level.

In step S901, the control unit 201 controls the display such that the screen is changed from the screen in Fig. 3A to the screen in Fig. 7A. By the processing, a message 702 indicating that the cellular phone 200 is being connected with the digital camera 100 is displayed, and this enables the user to recognize the state of being connected.

In step S902, the control unit 201 determines whether an instruction for adding position information to the images in the camera has been received. If the control unit 201 determines that the instruction has not been received (NO in step S902), the processing in this step is repeated. If the control unit 201 determines that the instruction has been received (YES in step S902), the process proceeds to step S903.

In step S903, the control unit 201 displays a message on the display unit 206, for example, a message like the message illustrated in Fig. 7B, indicating that the position information addition processing is being performed. While the message is displayed, the control unit 201 analyzes the log data stored in the recording medium 210, and obtains information indicating the record period of the log data. Specifically, the control unit 201 obtains the date and time the log data generation was started, and the date and time the generation processing was ended. As described above, in a case where a plurality of sets of log data have been recorded, for each set of the log data, the control unit 201 obtains the start date and time and the end date and time.

In step S904, the control unit 201 sends a signal for requesting IDs capable of identifying images whose imaging dates and times are included in the log data record period obtained in step S903 and the imaging dates and times of the images. The signal to be sent in this step includes at least the date and time information indicating the date and time the log data generation was started and the date and time information indicating the date and time the log data generation was ended. The date and time information included in the request decides the range of images to which the position information is to be added. As described above, in a case where a plurality of sets of log data have been recorded, the date and time information indicating the start date and time and the end date and time of each log data is included. The processing in step S903 and step S904 correspond to processing in step S801 in Fig. 8.

In step S905, the control unit 201 determines whether the IDs and imaging dates and times (UTC) sent from the digital camera 100 in response to the request sent in step S904 have been received. If the control unit 201 determines that the IDs and imaging dates and times (UTC) have not been received (NO in step S905), the processing in this step is repeated to wait for reception of IDs and imaging dates and times (UTC). If the control unit 201 determines that the imaging dates and times (UTC) have been received (YES in step S905), the process proceeds to step S906.

In step S906, the control unit 201, using the date and time information as a key, matches the IDs of the images with the position information of the log data. Specifically, the control unit 201 compares the imaging dates and times (UTC) received in step S905 to the date and time information corresponding to each position information included in the log data. As a result of the comparison, if a relationship that the date and time difference is equal to or less than a predetermined threshold is satisfied, the control unit 201 determines that the imaging date and time (UTC) and the date and time information included in the log data have matched. The control unit 201 associates the ID corresponding to the matched imaging date and time (UTC) with the position information corresponding to the date and time information, and stores the information in the working memory 104.

As described above, the ID has a unique value for each image. In other words, associating the ID with the position information is equivalent to associating the image with the position information. The processing is performed to all imaging dates and times (UTC) received in step S905. As a result of the processing, for example, in the working memory 104, a plurality of sets of IDs and position information are recorded. This processing corresponds to the processing in step S803 in Fig. 8.

In step S907, the control unit 201 sends, to the digital camera 100, the sets of the IDs of the images and the position information stored in the working memory 204. Thorough this processing, the digital camera 100 moves to the ready state for addition of the position information to the images using the IDs as keys. This processing corresponds to the processing in step S804 in Fig. 8.

The operation in the cellular phone 200 has been described.

Hereinafter, the operation of the digital camera 100 corresponding to the above-described operation of the cellular phone 200 will be described.

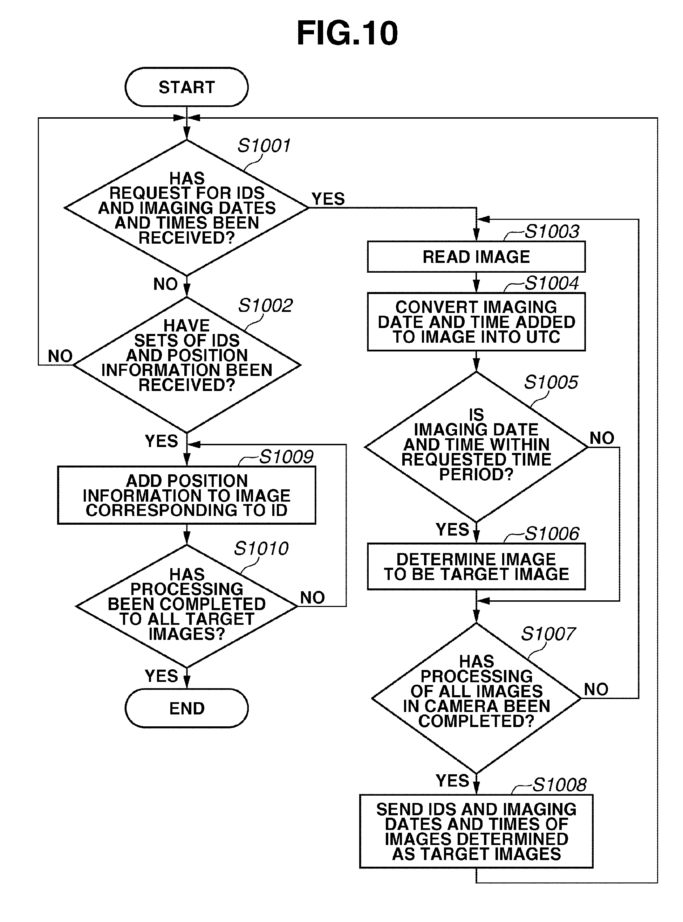

Fig. 10 is a flowchart illustrating the operation of the digital camera 100 for adding the position information. The processes illustrated in the flowchart are implemented by the control unit 101 in the digital camera 100 by executing a program stored in the non-volatile memory 103, and controlling each unit in the digital camera 100 according to the program. The following flowcharts are similarly implemented in the digital camera 100. The processing illustrated in the flowchart is started in response to the establishment of communication with the cellular phone 200 at the application level.

In step S1001, the control unit 101 determines whether a request for IDs and imaging dates and times of images has been received.

First, a case where the control unit 101 determines that the request has been received (YES in step S1001) will be described. In this case, the process proceeds to step S1003.

In step S1003, the control unit 101 reads the header information of one image out of the images recorded in the recording medium 110, and holds the information in the working memory 104.

In step S1004, the control unit 101 converts the imaging date and time recorded in the read image into UTC. Specifically, the control unit 101 reads the time difference information recorded in the header area of the image, and based on the time difference information, converts the imaging date and time of the recorded information of the RTC 107 into UTC. For example, if the time difference information of UTC+9 has been recorded, the imaging date and time is set back nine hours to convert the imaging date and time into UTC.

In step S1005, the control unit 101 determines whether the imaging date and time (UTC) converted in UTC corresponds to the received request. Specifically, the control unit 101 determines whether the imaging date and time (UTC) is included within the start date and time and end date and time of the log data included in the request. If the control unit 101 determines that the imaging date and time corresponds to the request (YES in step S1005), the process proceeds to step S1006. If the control unit 101 determines that the imaging date and time does not correspond to the request (NO in step S1005), the processing in step S1006 is skipped, and the process proceeds to step S1007.

In step S1006, the control unit 101 decides the image including the header information read in step S1003 to be a target image. The target image in this description means an image to be a target whose corresponding ID is to be sent to the cellular phone 200.

In step S1007, the control unit 101 determines whether the processing in step S1005 has been performed with respect to all images recorded in the recording medium 110. If the control unit 101 determines that there is an unprocessed image (NO in step S1007), the process returns to step S1003, and similar processing is performed to other images. If the CPU 101 determines that the processing has been performed to all images (YES in step S1007), the process proceeds to step S1008.

In step S1008, the control unit 101 sends, to the cellular phone 200, the IDs and imaging dates and times (UTC) of the images decided to be the target images in step S1006 as the response to the request received in step S1001.

The operation performed when the control unit 101 determines that the request has been received in step S1001 has been described.

Next, the operation performed when the control unit 101 determines that the request has not been received in step S1001 (No in step S1001) will be described. In this case, the process proceeds to step S1002.

In step S1002, the control unit 101 determines whether a set of an ID and position information has been received. If the control unit 101 determines that a set has not been received (NO in step S1002), the process returns to step S1001, and waits for a reception of a request or a set. If the control unit 101 determines that a set has been received (YES in step S1002), the process proceeds to step S1009.

In step S1009, the control unit 101 adds, to the image corresponding to the ID included in the received set, the position information included in the set. Specifically, the control unit 101 records, in the header area of the image corresponding to the ID, the position information included in the set.

In step S1010, the control unit 101 determines whether the addition of the position information in step S1009 has been performed to all received sets. If the control unit 101 determines that the processing has not been performed to all sets (NO in step S1010), the process returns to step S1009, and performs the addition of the position information using remaining sets. If the control unit 101 determines that the processing has been performed to all sets (YES in step S1010), the processing in the present flowchart ends.

The operation of the digital camera 100 has been described above.

As described above, in the present exemplary embodiment, the cooperation of the digital camera 100 and the cellular phone 200 enables the addition of the position information to the images without sending the log data and the images themselves to a PC.

Further, in the present exemplary embodiment, both the generation of the log data and the matching processes are performed with the application running on the cellular phone 200. The arrangement is employed due to the following reasons. The matching processing in the cellular phone 200 enables flexible responses, for example, removing low accuracy log data from targets of the logging or the matching. On the other hand, if the matching is performed on the camera side, it is necessary to obtain information such as the accuracy of the log data from the cellular phone. For these reasons, both the generation of the log data and matching processes are performed in the cellular phone 200. The arrangement enables easy matching corresponding to characteristics of log data generation. Further, the digital camera 100 is only required to include the function of adding position information included in a set to an image corresponding to an ID included in the received set. Consequently, as compared to a case where the matching is performed in the digital camera, or a GPS is provided to the digital camera, the costs of the digital camera can be reduced.

Further, in the present exemplary embodiment, it is not necessary to send images for the matching to the cellular phone. Consequently, as compared to a case where images are sent to another device and matching is performed, the communication amount can be reduced.

Further, in the present exemplary embodiment, UTC is used in the matching. By the arrangement, even if log data or images are obtained in a state time zones set in each device are different, the matching can be performed without being affected thereby.

The second exemplary embodiment is described. In the first exemplary embodiment, it is assumed that the time counted by the RTC 107 in the digital camera 100 is exact, and the matching is performed. However, generally, the time counted by the RTC is not exact as compared to the time calculated from GPS signals. To solve the problem, in the present exemplary embodiment, matching performed in consideration of a difference of the time in the RTC in the digital camera 100 will be described. In the present exemplary embodiment, points similar to those in the first exemplary embodiment are omitted, and feature points in the present exemplary embodiment are mainly described.

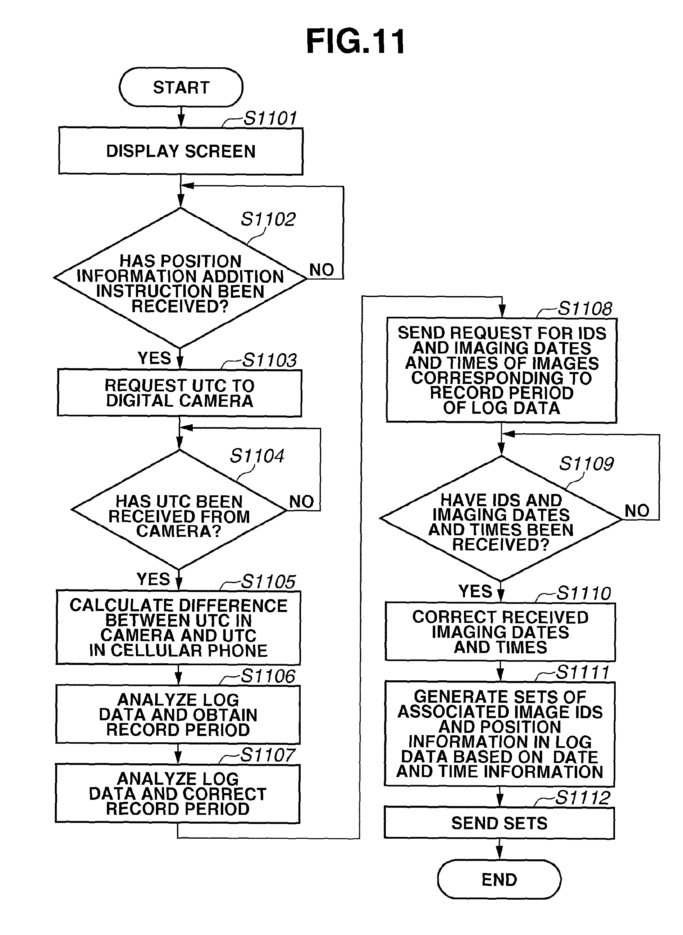

Fig. 11 is a flowchart illustrating an operation of the cellular phone 200 according to the second exemplary embodiment. The processing illustrated in the flowchart is started in response to the establishment of communication with the digital camera 100 at the application level.

In steps S1101 and 1102, processes similar to those in steps S901 and S902 in Fig. 9 are performed.

In step S1103, the control unit 201 requests UTC to the digital camera 100. In this processing, the control unit 201 requests date and time information obtained by converting the date and time information output from the RTC 107 in the digital camera 100 into UTC. In response to the request, using information of a preset time zone, the digital camera 100 converts the output from the RTC 107 into UTC, and sends the UTC to the cellular phone 200.

In step S1104, the control unit 201 determines whether the UTC has been received from the digital camera 100. If the control unit 201 determines that UTC has not been received (NO in step S1104), the processing in this step is repeated to wait for reception of UTC. If the control unit 201 determines that UTC has been received (YES in step S1104), the process proceeds to step S1105.

In step S1105, the control unit 201 calculates a difference between UTC in the digital camera 100 received from the digital camera 100 and UTC obtained as a result of the conversion of the current date and time obtained from the log obtaining unit 208. For example, it is assumed that the UTC in the digital camera 100 is 12:00:00, and the UTC in the cellular phone 200 is 12:10:00. In this case, it is understood that the RTC 107 in the digital camera 100 is delayed by 10 minutes.

In step S1106, the control unit 201 performs processing similar to that in step S903 in Fig. 9 to obtain a log data record period, and records the period in the working memory 104.

In step S1107, the control unit 201 corrects the log data record period obtained in step S1106. With respect to the processing, a case where log data like the log data illustrated in Fig. 4 is to be processed will be described. In the case of Fig. 4, the log data record periods are a period from 08:50 on June 5th in 2012 to 11:50, and a period from 19:59 on June 5th in 2012 to 23:54. The record periods are corrected based on differences with the UTC in the digital camera 100. In step S1105, if it is determined that UTC in the digital camera 100 is delayed by 10 minutes, the log data record periods are delayed by 10 minutes.

In other words, the start dates and times and end dates and times of the log data are delayed by 10 minutes respectively. In the example in Fig. 4, the log data record periods are corrected to a period from 08:40 on June 5th in 2012 to 11:40, and a period from 19:49 on June 5th in 2012 to 23:44. The processing corrects the times delayed by 10 minutes to the dates and times corresponding to the digital camera 100 counting the time delayed by 10 minutes. As described above, the digital camera 100 determines whether the imaging dates and times converted into UTC to correspond to the request surely correspond to the request. The imaging dates and times are based on the output of the RTC 107, and consequently, if the RTC 107 is delayed by 10 minutes, the UTC obtained as a result of the conversion is also delayed by 10 minutes as compared to the UTC obtained in the cellular phone 200. To offset the difference, the correction in this step is performed.

In step S1108, the control unit 201 requests to the digital camera 100, IDs and imaging dates and times (UTC) of images corresponding to the record period of the log data corrected in step S1107. In response to the request, the digital camera 100 converts the imaging dates and times of the images into UTC, and determines whether the imaging dates and times (UTC) are within the requested period. As a result of the determination, if the imaging dates and times are within the period, the IDs and imaging dates and times (UTC) of the images are sent to the cellular phone 200.

In step S1109, similarly to the step S905, the control unit 201 waits for reception of IDs and imaging dates and times (UTC). If the control unit 201 determines that IDs and imaging dates and times (UTC) have been received (YES in step S1109), the process proceeds to step S1110.

In step S1110, to each of the received imaging dates and times (UTC), the control unit 201 performs correction using the difference calculated in step S1105. By the processing, for example, imaging date and time (UTC) based on the output of the RTC 107 counting the UTC delayed by 10 minutes is corrected to the date and time corresponding to the date and time information of the log data, that is, date and time information based on the exact UTC calculated from signals from GPS satellites.

In step S1111, based on the imaging dates and times (UTC) corrected in step S1110, and the date and time information in the log data, the control unit 201 performs the matching. The processing is similar to that in step S906 in Fig. 9, and consequently, the description is omitted.

In step S1112, processing similar to that in step S907 in Fig. 9 is performed.

The operation in the cellular phone 200 according to the present exemplary embodiment has been described.

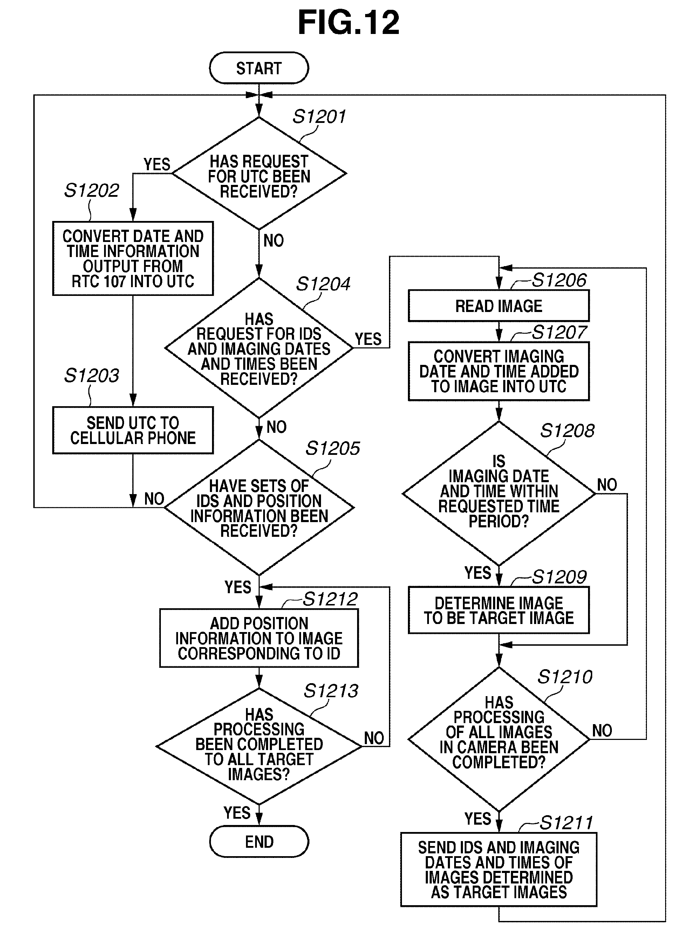

Hereinafter, an operation of the digital camera 100 corresponding to the above-described operation of the cellular phone 200 will be described. Fig. 12 is a flowchart illustrating an operation of the digital camera 100 according to the second exemplary embodiment. The processing illustrated in this flowchart is started in response to the establishment of communication with the cellular phone 200 at the application level.

In step S1201, the control unit 101 determines whether a request for UTC has been received from the cellular phone 200. If the control unit 101 determines that a request has been received (YES in step S1201), the process proceeds to step S1202.

In step S1202, based on preset time difference information, the control unit 101 converts the date and time information output from the RTC 107 into UTC.

In step S1203, the control unit 101 sends the converted UTC to the cellular phone 200.

In step S1201, if the control unit 101 determines that a request has not been received (NO in step S1201), the process proceeds to step S1204.

In steps S1204 to S1213, processes similar to those in steps S1001 to S1010 in Fig. 10 are performed.

The operation in the digital camera 100 according to the present exemplary embodiment has been described.

As described above, in the present exemplary embodiment, the matching is performed in consideration of the difference of the time in the RTC in the digital camera 100. This enables further accurate position information addition. The time adjustment and the matching processing are performed based on UTC. Consequently, the matching can be performed without being affected by time zones and daylight-saving time settings.

In the present exemplary embodiment, in the calculation of a difference between date and time obtained by the log obtaining unit 208 in the cellular phone 200 and date and time counted by the RTC 107 in the digital camera 100, the date and time counted by the RTC 107 in the digital camera 100 is converted into UTC. The present exemplary embodiment is not limited to the arrangement. For example, date and time information of the RTC 107 in the digital camera 100 and preset time difference information may be sent to the cellular phone 200, and the cellular phone 200 may convert the date and time information received from the digital camera 100 into UTC. In this case, the processing in step S1002 in Fig. 10 is deleted, and in step S1003, the control unit 101 sends the date and time information of the RTC 107 in the digital camera 100 and the preset time difference information to the cellular phone 200.

Similarly, in the present exemplary embodiment, in the cellular phone 200, using a difference between date and time counted by the RTC 207 in the cellular phone 200 and date and time counted by the RTC 107 in the digital camera 100, a log data record period is corrected. The present exemplary embodiment is not limited to the arrangement. For example, a calculated difference and information indicating a log data record period are sent to the digital camera 100, and the digital camera 100 may correct the log data record period using the difference. In this case, the processing in step S907 in Fig. 9 is deleted, and in step S908, the control unit 201 sends the difference and the information indicating the log data record period to the digital camera 100. Alternatively, the imaging date and time may be corrected to corresponding date and time by using the difference. Any method may be employed as long as the time axis of the log data can be matched to the time axis of the imaging date and time. When the difference is sent to the digital camera 100, the imaging date and time of an image whose ID is to be sent may be corrected by the difference, and then, the difference may be transmitted to the cellular phone 200. In this case, instead of performing the processing in step S910 in Fig. 9, before the processing in step S1011 in Fig. 10 is performed, the imaging date and time is to be corrected by the difference.

The third exemplary embodiment is described. In the third exemplary embodiment, an example in which if the log data is updated after previous matching processing, when the cellular phone 200 is connected to the digital camera 100, a message urging the user to add position information to images using new log data is displayed, is described. In the present exemplary embodiment, points similar to those in the first and second exemplary embodiments are omitted, and feature points in the present exemplary embodiment are mainly described.

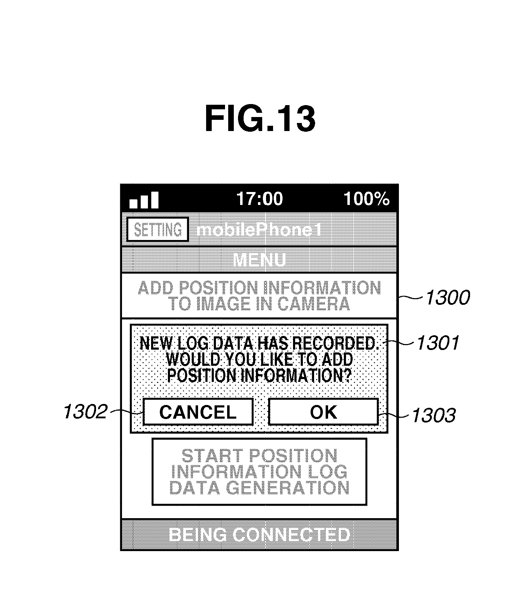

Fig. 13 illustrates a screen displayed on the display unit 206 of the cellular phone 200 when a communication between the digital camera 100 and the cellular phone 200 is established at the application level. On a screen 1300, a message 1301 for urging the user to select whether to add the position information is displayed. The cellular phone 200 according to the present exemplary embodiment provides a flag indicating existence of new log data. The flag is turned on each time recording of new log data is performed. In a state the flag is turned on, when a communication with the digital camera 100 is established, the message illustrated in Fig. 13 is displayed. In other words, since new log data has been recorded, the user is asked whether to add position information using the new log data. By the processing, without concern for whether the new log data has recorded, the user can execute the position information addition.

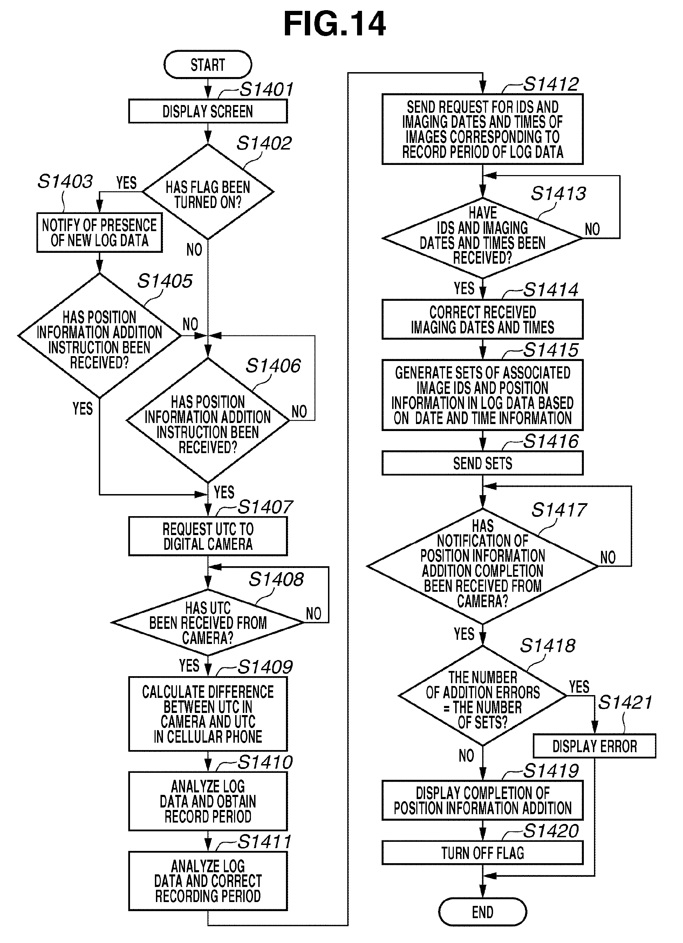

Fig. 14 is a flowchart illustrating an operation of the cellular phone 200 according to the present exemplary embodiment. The processing illustrated in the flowchart is started in response to the establishment of communication with the digital camera 100 at the application level.

In step S1401, a process similar to that in step S1101 in Fig. 11 is performed.

In step S1402, the control unit 201 checks whether the flag has been turned on. The flag is stored in the non-volatile memory 103, and if the power supply is turned off, the state can be maintained. The flag is switched to ON in response to a start of the log data recording, from being in a state where the flag is turned off.

If the control unit 201 determines that the flag has not been turned on (NO in step S1402), the process proceeds to step S1406. If the control unit 201 determines that the flag has been turned on (YES in step S1402), the process proceeds to step S1403.

In step S1403, the control unit 201 displays a message on the display unit 206, for example, a message for the user to notify of the fact that new log data has been recorded and to urge the user to select whether to add the location information. For example, a screen as illustrated in Fig. 13 is displayed. Together with the display of the message, a cancel button 1302 and an OK button 1303 are displayed. The user selects the cancel button 1302 via the operation unit 205 to input an instruction not to execute the processing for adding position information. The user selects the OK button 1303 via the operation unit 205 to input an instruction to execute the processing for adding position information.

In step S1405 executed together with the displaying operation, the control unit 201 determines which instruction has been received from the user. If the control unit 201 determines that the instruction not to execute the addition processing for adding position information has been received (NO in step S1405), the process proceeds to step S1406. If the control unit 201 determines that the instruction to execute the processing for adding position information has been received (YES in step S1405), the process proceeds to step S1407.

In steps S1406 to S1416, processes similar to those in steps S1102 to S1112 in Fig. 11 are performed.

In response to completion of the processing in step S1416, in the present exemplary embodiment, further, the processing in step S1417 is performed.

In step S1417, the control unit 201 determines whether a notification of completion of the position information addition has been received from the digital camera 100. The digital camera 100 according to the present exemplary embodiment, in response to the completion of the position information addition, sends a notification of completion to the cellular phone 200. The processing will be described below. If the control unit 201 determines that the notification has not been received (NO in step S1417), the processing in this step is repeated to wait for the notification. If the control unit 201 determines that the notification has been received (YES in step S1417), the process proceeds to step S1418.

In step S1418, the control unit 201 determines whether the number of errors included in the completion notification is equal to the number of sets sent to the digital camera 100. The number of errors in this description is the number of images to which the position information has not been added out of the images corresponding to the IDs included in the sets sent to the digital camera 100 in step S1416. The number of errors is included in the completion notification by the digital camera 100 and sent. The processing will be described below.

First, a case where the control unit 201 determines that the number of errors included in the completion notification is not equal to the number of sets sent to the digital camera 100 (NO in step S1418) will be described. In this case, to at least one image, the position information has been added. In this case, the process proceeds to step S1419.

In step S1419, the control unit 201 displays a message indicating completion of the position information addition on the display unit 206. If the number of errors is one or more, together with the message, a message indicating existence of an image to which the position information has not been added is displayed.

In step S1420, the control unit 201 turns off the flag. By the processing, until new log data is generated, the notification in step S1403 is not displayed. This is because the processing for adding the position information has already been performed, and it is not necessary to perform the processing again.

Next, a case where, in step S1418, the control unit 201 determines that the number of errors included in the completion notification is equal to the number of sets sent to the digital camera 100 (YES in step S1418) will be described. The case where the number of errors included in the completion notification is equal to the number of sets sent to the digital camera 100 means that the position information has not been added to any images corresponding to the IDs included in the sets sent to the digital camera 100 in step S1416. In this a case, the process proceeds to step S1421.

In step S1421, the control unit 201 displays, on the display unit 206, a message indicating that no position information has been added. Then, without performing the processing in step S1420, the processing in this flowchart ends. In other words, if the control unit 201 has not been able to add the position information to any images corresponding to the IDs included in the sets sent to the digital camera 100 in step S1416, the control unit 201 determines that the position information addition processing has not been performed, and does not turn off the flag.

The operation in the cellular phone 200 according to the present exemplary embodiment has been described.

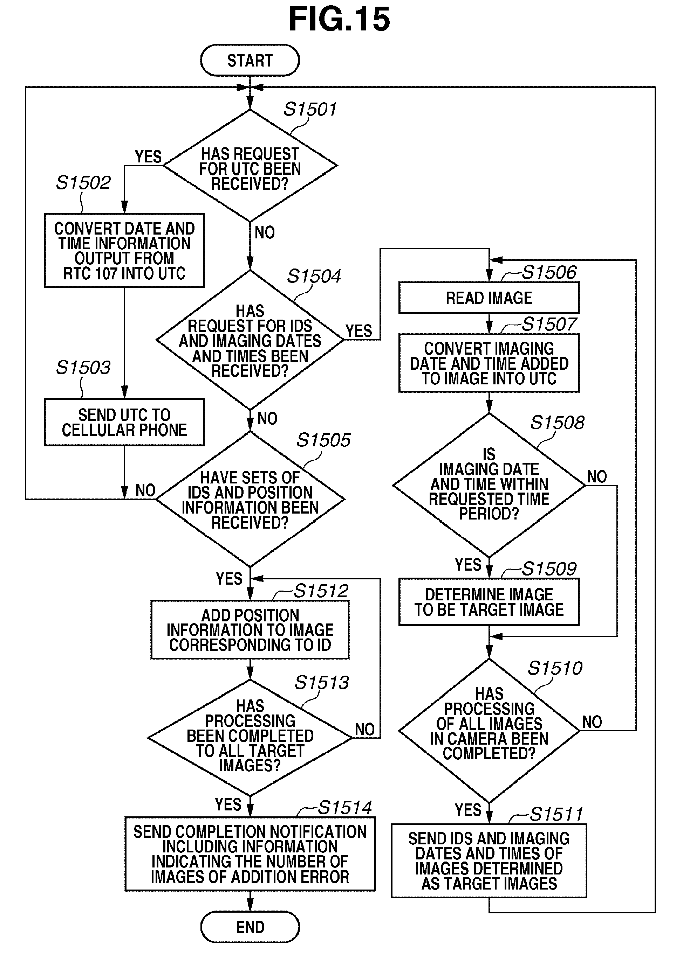

Hereinafter, the operation of the digital camera 100 corresponding to the above-described operation of the cellular phone 200 will be described. Fig. 15 is a flowchart illustrating an operation of the digital camera 100 according to the third exemplary embodiment. The processing illustrated in this flowchart is started in response to the establishment of communication with the cellular phone 200 at the application level.

In steps S1501 to 1513, processes similar to those in steps S1201 to S1213 in Fig. 12 are performed.

In the present exemplary embodiment, in response to completion of the processing in step S1513, further, the processing proceeds to step S1514.

In step S1514, the control unit 101 sends a message indicating completion of the position information addition to the cellular phone 200. The completion notification includes, as the number of errors, the number of images to which the position information has not been added out of the images corresponding to the IDs included in the sets received from the cellular phone 200 in step S1505. The use of the number of errors has been described in the above description.

The operation in the digital camera 100 according to the present exemplary embodiment has been described.

As described above, in the exemplary embodiment, at the timing the cellular phone 200 is connected to the digital camera 100, the user is notified of the fact that new log data has been recorded. This enables increase in the usability.

In the present exemplary embodiment, existence of new log data is controlled by using one flag. Alternatively, the flag can be generated for each connected device. Specifically, a universally unique identifier (UUID) of a connected device is associated with a flag, and the information is stored. By the processing, whether new log data exists can be determined for each connected device. Consequently, when a plurality of devices is to be connected, the user can be notified of at further accurate timings.

### Other Exemplary Embodiments

In addition to the above-described exemplary embodiments, in a case where an image is in write inhibit (protect, as it is called) state, or position information has already been added, even if the image is included within a requested record period, it is possible not to set the image as target image. Specifically, between the processings in step S1004 and S1005 in Fig. 10, whether the device is in the image write inhibit (protect, as it is called) state, or position information has already been added may be determined. If it is determined that the image is in write inhibit (protect, as it is called) state, or position information has already been added, the processing proceeds to step S1007. In other words, it is decided not to set the image as a target image of the matching. By the processing, unnecessary processing such as addition of position information to images in a position information write inhibit state or to images to which the position information addition has already been performed can be omitted.

Further, in the above-described exemplary embodiments, for log data, UTC obtained from GPS signals is employed. Alternatively, information obtained from the RTC of the cellular phone 200 may be employed. In this case, date and time information counted by the RTC may be regularly corrected. As information used for the correction, for example, date and time obtained from the log obtaining unit 208 or date and time obtained using Network Time Protocol (NTP) by accessing an Internet network via the connection unit 211 may be employed. Alternatively, date and time received from a base station by accessing a public telephone network via the public line connection unit 212 may be employed. Further, the RTC may count UTC. The arrangement can maintain the accuracy of the RTC at certain standards. In other words, the UTC counted by the RTC can be used in place of the UTC obtained from the GPS signals. As a result, the necessity for waiting for the reception and the analysis of GPS signals, and the calculation of the UTC in each position information addition to log data can be eliminated, and faster processing can be implemented. The RTC of the cellular phone 200 is an example of the date and time obtaining unit.

In the above-described exemplary embodiments, in step S1112 in Fig. 11, when sets of IDs and location information are sent, time difference information corresponding to each location information may be included. In this case, in the addition of position information to an image, the digital camera 100 may overwrite the time difference information recorded to the image with the received time difference information.

Together with the processing, the imaging date and time is to be overwritten such that the imaging date and time becomes standard time corresponding to the new time difference information. For example, the cellular phone 200 may calculate standard time corresponding to the time difference information from the UTC used for the matching, and include the time difference information and the standard time when the cellular phone 200 sends the set of the ID and the position information, and the digital camera 100 may overwrite respective received time difference information and standard time. Alternatively, the digital camera 100 may receive the time difference information, calculate UTC once using the time difference information and the imaging date and time before the overwrite processing, further calculate corresponding standard time from the received time difference information, and overwrite the UTC as imaging date and time. The processing enables the modification of the imaging date and time of the image and the time difference information to appropriate information without further time and effort of the user.

In the above-described exemplary embodiments, location information is added to an image via an ID. Alternatively, imaging date and time may be employed instead of the ID. In this case, for example, in step S904 in Fig. 9, the control unit 201 requests the imaging dates and times without requesting the IDs. In step S906, the control unit 201 associates the imaging dates and times with the position information instead of associating the IDs with the position information. The control unit 101 in the digital camera 100 that has received the sets in which the imaging dates and times and the position information are associated with each other, using the imaging dates and times as keys, specifies images to which the position information is to be added. This simplifies the data to be sent and received since the addition of the ID information is not required in the communication between the cellular phone 200 and the digital camera 100.

### Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment (s) of the present invention, and by a method performed by the computer of the system or apparatus by, for example, reading out and executing the computer executable instructions from the storage medium to perform the functions of one or more of the above-described embodiment (s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. A communication apparatus comprising:
position obtaining means configured to obtain position information;
date and time obtaining means configured to obtain date and time information indicating date and time when the position information was obtained;
recording means configured to record a plurality of pieces of information in which the position information and the date and time information are associated with each other, as log data in a recording medium;
reception means configured to receive identification information capable of specifying image files recorded in an external device and imaging dates and times relating to the image files, from the external device without receiving the image files;
determination means configured to determine whether the imaging dates and times received by the reception means and the date and time information of the log data are in a predetermined relationship; and
association means configured to associate identification information corresponding to the imaging dates and times determined to be in the predetermined relationship with position information corresponding to the date and time information of the log data determined to be in the predetermined relationship.

2. The communication apparatus according to claim 1, further comprising transmission means configured to transmit to the external device the position information and the identification information associated by the association means.

3. The communication apparatus according to any one of claims 1 and 2, wherein the image file includes an imaging date and time relating to the image file.

4. The communication apparatus according to claim 3, wherein the imaging date and time is recorded in a header area of the image file.

5. The communication apparatus according to any one of claims 1 to 4, wherein the reception means is configured not to receive identification information of an image file with which position information has already been associated, out of the image files recorded in the external device.

6. The communication apparatus according to any one of claims 1 to 5, wherein the reception means is configured not to receive the identification information of an image file generated by the external device in a period other than a record period of the log data.

7. The communication apparatus according to any one of claims 1 to 6, further comprising:
decision means configured to decide a range of the image files to which the position information is to be added; and
request means configured to request the identification information of the image files based on the range decided by the decision means,
wherein the reception means receives the identification information and the imaging dates and times sent from the external device in response to the request.

8. The communication apparatus according to claim 7, wherein the decision means decides, as the range, a period decided by start date and time indicating the start of the recording of the log data and end date and time indicating the end of the recording.

9. The communication apparatus according to claim 7, further comprising:
current date and time obtaining means configured to obtain current date and time;
date and time reception means configured to receive date and time information output from a time measuring means of the external device; and
first correction means configured to correct the date and time information indicating the record period of the log data based on a difference between the current date and time obtained by the current date and time obtaining means and the date and time information received from the external device,
wherein the decision means determines the record period of the corrected log data to be the range.

10. The communication apparatus according to claim 9, wherein the first correction means is further configured, based on a difference between the current date and time obtained by the current date and time obtaining means and the date and time information received from the external device, to correct each date and time information of the record period of the log data, and
wherein the association means is configured, based on the date and time indicated by the date and time information included in the log data corrected by the first correction means and the date and time indicated by the imaging date and time received by the reception means, to associate the position information included in the log data with the identification information.

11. The communication apparatus according to claim 9, further comprising second correction means configured, based on a difference between the current date and time obtained by the current date and time obtaining means and the date and time information received from the external device, to correct the imaging date and time received by the reception means,
wherein the association means is configured, based on the date and time indicated by the imaging date and time corrected by the second correction means and the date and time indicated by the date and time information included in the log data, to associate the position information included in the log data with the identification information.

12. The communication apparatus according to any one of claims 1 to 11, wherein the imaging date and time is information indicating date and time based on a local standard time,
wherein the image file recorded in the external device is associated with time difference information indicating a time difference between the imaging date and time based on a local standard time and imaging date and time based on Universal Time Coordinated (UTC), and
wherein the reception means is configured to receive imaging date and time corrected to date and time based on UTC by the time difference information.

13. The communication apparatus according to any one of claims 1 to 12, wherein the predetermined relationship is a relationship in which a difference between the date and time indicated by the date and time information included in the log data and the date and time indicated by the imaging date and time is smaller than a predetermined value.

14. The communication apparatus according to any one of claims 1 to 13, wherein the predetermined relationship is a relationship in which a difference between the date and time indicated by the date and time information included in the log data and the date and time indicated by the imaging date and time is the smallest.

15. The communication apparatus according to any one of claims 1 to 14, further comprising means configured, in a case where log data is newly recorded after the identification information has been associated with the position information by the association means, to notify a user accordingly.

16. The communication apparatus according to any one of claims 1 to 15, wherein the date and time information obtained by the date and time obtaining means is based on UTC.

17. The communication apparatus according to any one of claims 1 to 16, wherein the identification information is generated in response to turning on of the power supply of the external device.

18. The communication apparatus according to any one of claims 1 to 17, wherein the communication apparatus is a cellular phone.

19. The communication apparatus according to any one of claims 1 to 18, further comprising imaging means.

20. The communication apparatus according to any one of claims 1 to 19, wherein the external device is a camera.

21. An image processing apparatus comprising:
recording means configured to record an image file together with identification information for specifying the image file and imaging date and time in a recording medium;
reception means configured to receive, from an external device, a request for the identification information and the imaging date and time of an image file whose imaging date and time is included in a range based on date and time;
transmission means configured to transmit to the external device, in response to the request from the external device, the identification information and the imaging date and time of a corresponding image file;
reception means configured to receive, from the external device, the identification information and position information associated with the identification information; and
addition means configured to add, to the image file specified by the identification information, the position information associated with the identification information.

22. A method of controlling a communication apparatus, the method comprising:
obtaining position information;
obtaining date and time information indicating date and time when the position information was obtained;
recording a plurality of pieces of information in which the position information and the date and time information are associated with each other, as log data in a recording medium;
receiving identification information capable of specifying image files recorded in an external device and imaging dates and times relating to the image files, from the external device without receiving the image files;
determining whether the received imaging dates and times received in the reception and the date and time information of the log data are in a predetermined relationship; and
associating identification information corresponding to the imaging dates and times determined to be in the predetermined relationship with position information corresponding to the date and time information of the log data determined to be in the predetermined relationship.

23. The method of controlling a communication apparatus according to claim 22, further comprising transmitting to the external device the position information and the identification information associated by the association unit.

24. The method of controlling a communication apparatus according to any one of claims 22 to 23, wherein in the receiving step, the identification information of an image file with which position information has already been associated, out of the identification information of the image files recorded in the external device, is not received.

25. The method of controlling a communication apparatus according to any one of claims 22 to 24, further comprising:
deciding a range of the image files to which the position information is to be added; and
requesting the identification information of the image files based on the decided range,
receiving the identification information and the imaging dates and times sent from the external device in response to the request.

26. The method of controlling a communication apparatus according to claim 25, further comprising:
obtaining current date and time indicating current date and time;
receiving date and time information output from a time measuring unit of the external device; and
correcting the date and time information indicating the record period of the log data based on a difference between the current date and time obtained in the obtaining step and the date and time information received from the external device,
wherein the record period of the corrected log data determined as the range.

27. The method of controlling a communication apparatus according to claim 26, wherein in the correcting step, correcting each date and time information of the record period of the log data based on a difference between the obtained current date and time and the date and time information received from the external device, and
wherein associating the position information included in the log data with the identification information based on the date and time indicated by the date and time information included in the corrected log data and the date and time indicated by the imaging date and time received from the external device.

28. The method of controlling a communication apparatus according to claim 26, further comprising
correcting the imaging date and time received from the external device based on a difference between the current date and time obtained by the current date and time obtaining unit and the date and time information received from the external device,
wherein associating the position information included in the log data with the identification information based on the date and time indicated by the corrected imaging date and time and the date and time indicated by the date and time information included in the log data.

29. The method of controlling a communication apparatus according to any one of claims 22 to 28, wherein the predetermined relationship is a relationship in which a difference between the date and time indicated by the date and time information included in the log data and the date and time indicated by the imaging date and time is smaller than a predetermined value.

30. The method of controlling a communication apparatus according to any one of claims 22 to 29, wherein the date and time information obtained by the date and time obtaining unit is based on UTC.

31. A method of controlling an image processing apparatus, the method comprising:
recording an image file together with identification information for specifying the image file and imaging date and time in the recording medium;
receiving a request for the identification information and the imaging date and time of an image file whose imaging date and time is included in a range based on date and time;
transmitting to the external device, in response to the request from the external device, the identification information and the imaging date and time of a corresponding image file;
receiving, from the external device, the identification information and position information associated with the identification information; and
adding, to the image file specified by the identification information, the position information associated with the identification information.

32. A computer-readable program for causing a computer to function as the communication apparatus according to any one of claims 1 to 20.

33. A computer-readable program for causing a computer to function as the image processing apparatus according to claim 21.
